(19) Europäisches Patentamt

European Patent Office

Office européen des brevets

(11) Veröffentlichungsnummer : **0 357 588 B1**

(12) # EUROPÄISCHE PATENTSCHRIFT

(45) Veröffentlichungstag der Patentschrift :
**01.04.92 Patentblatt 92/14**

(21) Anmeldenummer : **89890211.9**

(22) Anmeldetag : **09.08.89**

(51) Int. Cl.⁵ : **F02D 41/26,** F02D 41/22,
B60K 28/00

⸻

(54) **Regler für Kraftfahrzeuge mit Brennkraftmaschinen.**

(30) Priorität : **31.08.88 DE 3829546**

(43) Veröffentlichungstag der Anmeldung :
**07.03.90 Patentblatt 90/10**

(45) Bekanntmachung des Hinweises auf die
Patenterteilung :
**01.04.92 Patentblatt 92/14**

(84) Benannte Vertragsstaaten :
**AT BE CH DE ES FR GB IT LI NL SE**

(56) Entgegenhaltungen :
**DE-A- 3 500 440**
**GB-A- 2 043 310**
**GB-A- 2 125 577**

(56) Entgegenhaltungen :
**US-A- 4 642 631**
**PATENT ABSTRACTS OF JAPAN vol. 013, no.
258 (M-838) 15 Juni 89 & JP-A-1 63177 (RICOH
CO LTD) 09 März 1989**

(73) Patentinhaber : **Automotive Diesel
Gesellschaft m.b.H.
Derfflingerstrasse 15
A-4020 Linz (AT)**

(72) Erfinder : **Seibt, Artur, Dr.-Ing.
Prinz Eugen Strasse 6
A-1040 Wien (AT)**

(74) Vertreter : **Matschnig, Franz, Dipl.-Ing.
Siebensterngasse 54 Postfach 452
A-1071 Wien (AT)**

EP 0 357 588 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf ein Verfahren zum Speichern von Fehlern in einer Regleranordnung für Kraftfahrzeuge mit Brennkraftmaschinen, mit Rechen- und Reglereinheiten, die einen oder mehrere Mikrorechner samt Speichern für Programme, Daten etc. aufweisen und die zur Ermittlung und Abgabe von Stellgliedansteuersignalen und anderen Ausgangssignalen in Abhängigkeit von Geber- und Sensorsignalen eingerichtet sind, wobei Fehlerbitfolgen bei Auftreten von Fehlerzuständen der Brennkraftmaschine und/oder der Rechner-Reglereinheiten in einen elektrisch nicht löschbaren Fehlerspeicher z.B. einen EPROM eingelesen werden, wobei diese Fehlerbitfolgen zu einem späteren Zeitpunkt aus dem Fehlerspeicher ausgelesen werden.

Insbesondere zur Regelung und Steuerung von Dieselmotoren in Kraftfahrzeugen sind eine Vielzahl elektronischer Regleranordnungen, die nach einem Verfahren in der gegenständlichen Art arbeiten, bekannt geworden, z.B. aus der DE-A1-31 00 887 und den dort genannten Literaturstellen, der DE-A1-28 45 350, der GB-A-21 25 577 oder aus dem Vortrag Dr. Ing. A. Seibt vom 19. Mai 1985, "Elektronischer Regler für Dieselmotoren", 6. Internationales Wiener Motorensymposium, gedruckt in VDI-Fortschrittsberichte, VDI-Verlag. Vor allem durch die Verwendung von Mikrorechnern ist es leicht möglich, bei Auftreten von Fehlern entsprechende, die Art des Fehlers festlegenden Bitfolgen zu errechnen und abzuspeichern. Die Ermittlung der Fehler beinhaltet in erster Linie Plausibilitätskontrollen der von den Gebern und Sensoren gelieferten Signale, z.B. von Drehzahlsignalen, Temperatursignalen, Drucksignalen etc. Wenn diese Signale ober- oder unterhalb vorgegebener Grenzwerte liegen, kann eine Fehlermeldung abgegeben werden, unter Umständen erst dann, wenn nicht plausible Signale einige Male auftreten. Plötzliche, mit dem Verhalten des Regelsystems nicht in Einklang stehende Änderungen können z.B. auf Wackelkontakte oder Kurzschlüsse hinweisen. Ein überhöhter Strombedarf für Stellgliedansteuerungssignale ist wiederum ein Hinweis darauf, daß mechanische Probleme des Stellgliedes, z.B. Verklemmen, vorliegen. Wenn die entsprechenden, abgespeicherten Fehlerbitfolgen z.B. in einer Werkstatt ausgelesen werden, ergeben sich wertvolle Hinweise für eine Schadensbehebung.

Bis jetzt gelangen zur Abspeicherung von Fehlerbitfolgen zusätzliche, meist EEPROM-Speicher zur Anwendung, wobei die Fehlermeldungen nach dem Auslesen wieder gelöscht werden. Auch die GB-A-21 25 577 beschreibt das Abspeichern von Fehlern in nichtflüchtigen Speichern. Das Abspeichern der Fehler in einem RAM-Speicher eines Mikrorechners ist hingegen nicht zweckmäßig, da eine zusätzliche Pufferbatterie vorgesehen werden müßte, die bei Abklemmen des Reglers von der Autobatterie vor Informationsverlust schützt.

Ziel der Erfindung ist die Schaffung eines Verfahrens, das ohne Mehrkosten zu verursachen ein den Anforderungen der Praxis entsprechendes Abspeichern und Auslesen von Fehlermeldungen ermöglicht.

Dieses Ziel läßt sich mit einem Verfahren der eingangs ganannten Art erreichen, bei welchem erfindungsgemäß nach dem Auslesen der Fehler ein relativer Sperrcode in den Fehlerspeicher eingeschrieben wird, der das Auslesen älterer, vor dem sperrcode liegender Fehler für ein vorgegebenes Leseprogramm blockiert.

Die erfindungsgemäße Lösung bietet ein praxisgerechtes "Fehlertagebuch", aus dem in der Werkstatt im allgemeinen nur jene Fehler ausgelesen werden können, die seit dem letzten Auslesen eingeschrieben wurden. Die Verwendung eines elektrisch nicht löschbaren Speichers mag auf den ersten Blick als Nachteil angesehen werden, tatsächlich ist jedoch die Speicherkapazität handelsüblicher Speicher so groß, daß auf Lebenszeit eines Fahrzeuges bzw. Motors sämtliche auftretenden Fehler abgespeichert werden können. Dies bietet die Möglichkeit, daß auf besonderen Befehl der relative Sperrcode umgangen und hiedurch, z.B. in dem Herstellerwerk, sämtliche Fehler, die während des Betriebes des Kraftfahrzeuges aufgetreten sind, ausgelesen, aufgelistet und ausgewertet werden können.

Weitere Merkmale sind in den Patentansprüchen 2 bis 6 dargelegt.

Die Erfindung samt ihren weiteren Vorteilen ist im folgenden an Hand eines Ausführungsbeispiels näher erläutert, das in der Zeichnung veranschaulicht ist. In dieser zeigen Fig. 1 ein Blockschaltbild einer Regleranordnung, mit welcher das Verfahren nach der Erfindung durchführbar ist, Fig. 2a bis d schematisch das Abspeichern und Abrufen von Fehlermeldungen aus dem Fehlerspeicher und die Fig. 3 und 4 zwei Struktogramme, die sich auf das Einschreiben bzw. Auslesen der Fehler beziehen.

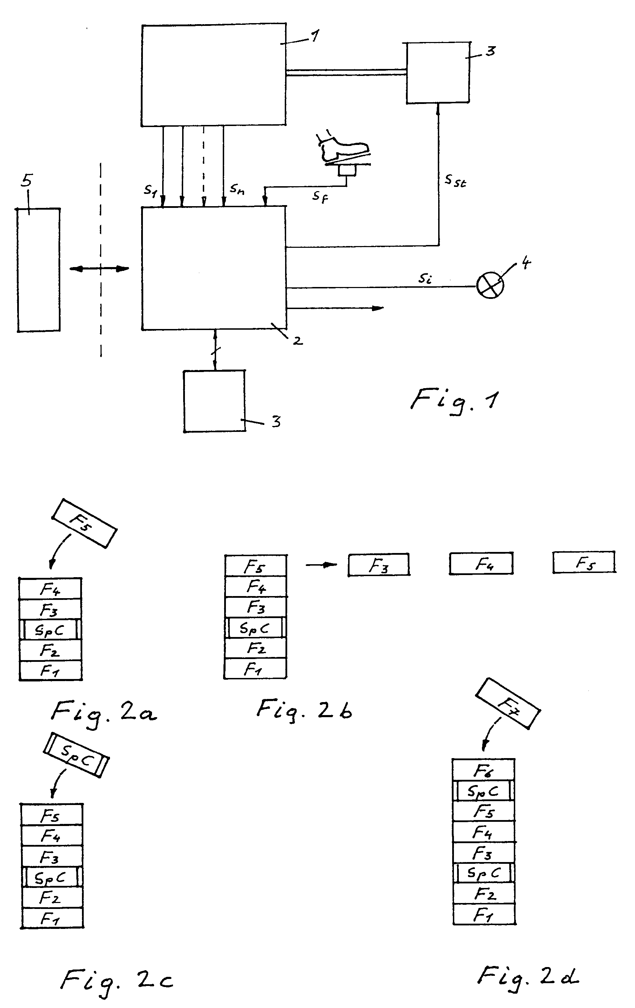

Wie aus Fig. 1 ersichtlich, ist zur Regelung einer Brennkraftmaschine, z.B. eines Dieselmotors 1, ein elektronischer Regler 2 vorgesehen, dem Signale $s_1$, $s_2$,...$s_n$ von Gebern und Sensoren, unter anderem auch das Signal $s_f$ eines Fahrpedal-Stellungsgebers zugeführt werden. Bei den übrigen Gebern und Sensoren kann es sich um Drehzahlgeber, Druckgeber, Temperatursensoren etc. handeln. Der Regler 2 enthält z.B. mehrere Mikrorechner und Speicher und errechnet aus den zugeführten Signalen $s_1$....$s_n$ ein Mengenstellgliedansteuersignal $s_{st}$, wobei zur Berechnung auch motor- und/oder fahrzeugspezifische Daten herangezogen werden, die ein einem Festwert-Parameterspeichermodul 3 abgespeichert sind. Mittels des Ansteuersignals $s_{st}$ kann ein Mengenstellglied, z.B. die Regelstange einer Einspritzpumpe, verstellt werden. Der Regler 2 kann auch weitere Ausgangssignale liefern, z.B. Signale $s_i$ für Indikatoren 4 oder Steuersignale für weitere Stellglieder.

Wie bereits eingangs erwähnt, können während des Betriebes verschiedene Fehler auftreten, wobei der Regler 2 in gleichfalls bekannter Weise dazu eingerichtet ist, bei Auftreten eines Fehlers eine Fehlermeldung in Form einer Fehlerbitfolge abzugeben. Wegen der begrenzten Anzahl von Fehlermöglichkeiten muß eine solche Bitfolge meist nur ein oder zwei Byte lang sein, sodaß auch nur wenig Speicherplatz für die Abspeicherung der Fehlermeldungen benötigt wird.

Zur Abspeicherung der Fehlerbitfolgen wird der Parameterspeichermodul 3 verwendet, der vorzugsweise als EPROM ausgebildet ist. Wegen der hohen Speicherkapazität derartiger Bausteine ($\geqq$ 8kByte) ist neben den motor- und fahrzeugspezifischen Parametern soviel Speicherplatz frei, daß bei durchschnittlicher Fehlerhäufigkeit sämtliche während der Lebensdauer eines Motors bzw. Fahrzeuges auftretende Fehler abgespeichert werden können.

Der Regler 2 ist nun dazu eingerichtet, die bei Auftreten eines Fehlers erarbeiteten Fehlerbitfolgen in der Reihenfolge ihres Auftretens in einen Fehlerspeicher, d.h. in einen freien Bereich des Parameterspeichers 3 einzuschreiben. Es können Vorkehrungen getroffen sein, daß ein ständig oder periodisch auftretender Fehler nicht immer wieder in den Fehlerspeicher eingeschrieben wird, d.h., daß identische Fehlerbitfolgen, die öfter als eine bestimmte Maximalanzahl hintereinander auftreten, nicht mehr abgespeichert werden.

In einer Reparaturwerkstatt können die Fehlermeldungen mittels eines Auslese- oder Diagnosegerätes 5 in umgekehrter Reihenfolge ausgelesen werden, wobei je nach Art der Fehlerbitfolge auch der Ausdruck schriftlicher Meldungen erfolgen kann, wie z.B. " 1o1 - Drehzahlsignal gestört ". Das Diagnosegerät 5 kann über ein hiezu vorgesehenes Interface an den Regler 2 angeschlossen werden.

Beim bzw. nach dem Auslesen der Fehlerbitfolgen werden diese jedoch im Fehlerspeicher nicht gelöscht - es handelt sich um einen zumindest elektrisch nicht löschbaren Speicher - sondern es wird nach der letzten Fehlermeldung ein relativer Sperrcode eingeschrieben, welcher bewirkt, daß zwar nach dem Sperrcode eingeschriebene weitere Fehlermeldungen, nicht jedoch vor dem Sperrcode liegende Meldungen ausgelesen werden können. Dies ist an Hand der Fig. 2a bis 2d graphisch erläutert. Fig. 2a zeigt den Fehlerspeicher mit "alten" Fehlerbitfolgen $F_1$, $F_2$, die bereits durch einen Sperrcode SpC "blockiert" sind. Während des Betriebes des Kraftfahrzeuges werden weitere Fehlerbitfolgen $F_3$ und $F_4$ eingeschrieben, eine Folge $F_5$ wird eben abgespeichert. In der Werkstatt werden die Fehler $F_5$, $F_4$, $F_3$ in eben dieser Reihenfolge ausgelesen und hierauf (Fig. 2c) wird ein weiterer Sperrcode SpC "darübergespeichert". Im weiteren Betrieb können sodann Fehlerbitfolgen $F_6$, $F_7$ abgespeichert werden usf.

Der Begriff "relativer" Sperrcode sagt aus, daß der Sperrcode zwar bei der üblichen Werkstättendiagnose das Auslesen der davor liegenden Fehlermeldungen blockiert, daß jedoch auf besonderen Befehl unter Mißachtung des Sperrcodes sämtliche im Fehlerspeicher abgespeicherte Fehlerbitfolgen ausgelesen werden können. Die Auswertung aller dieser Fehler, die i.a. natürlich bereits behoben worden sind, kann z.B. für die Entwicklungsabteilung des Herstellerwerkes eine wertvolle Information darstellen.

Wenn dafür Sorge getragen ist, daß in dem Regler ständig eine Uhr mitläuft, kann jede Fehlermeldung auch den Zeitpunkt des Auftretens des Fehlers in Form von Datum und Uhrzeit enthalten. Natürlich wird dann mehr Speicherplatz je Fehlerbitfolge benötigt.

Es versteht sich weiters, daß die Erzeugung und Überprüfung des Sperrcodes, auch dessen Mißachtung bei Vorliegen eines Sonderbefehles "Lese sämtliche Fehler aus", in dem Regler 2 oder in dem Diagnosegerät 5 softwaremäßig realisiert sein kann.

Um bei Verwendung eines EPROM-Speichers das Einschreiben der Fehlerbitfolgen auch unter den stark wechselnden Temperaturverhältnissen zu sichern, sollen die Schreibspannung und deren Impulsbreite der Umgebungstemperatur des Speichers angepaßt sein. Dies kann unter Verwendung eines Temperaturfühlers erfolgen, wobei bei fallender Temperatur Amplitude und Impulsbreite der Schreibspannung erhöht werden.

Eine mögliche softwaremäßige Realisierung der Erfindung ist nachstehend unter Bezugnahme auf Struktogramme (Nassi - Shneidermann-Diagramme) angegeben. Der Einfachheit halber ist der Programmteil zur Fehlerbehandlung als Teil des Reglerprogramms dargestellt.

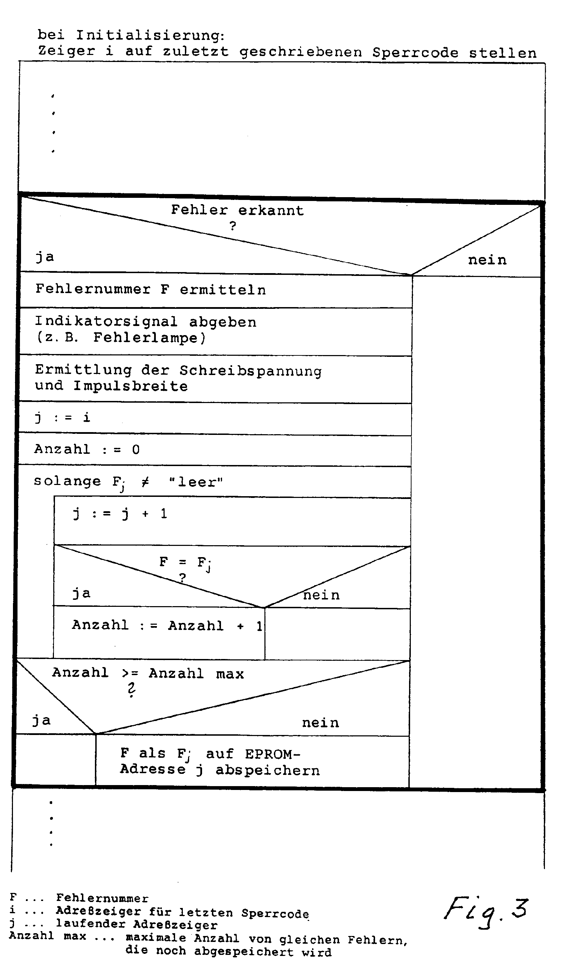

Das Struktogramm nach Fig. 3 bezieht sich auf das Einschreiben der Fehler. Schon im Initialisierungsteil des Reglerprogramms wird der Adreßzeiger i auf die Adresse des zuletzt geschriebenen Sperrcode gesetzt.

Wird kein Fehler erkannt, so wird das Reglerprogramm unverändert abgearbeitet.

Falls ein Fehler erkannt wird, wird zunächst die zu diesem Fehler gehörende Fehlernummer F ermittelt. Als Anzeige des Fehlers kann ein Signal an eine Fehlerlampe oder sonst ein Fehlerindikatorsignal abgegeben werden. Die für die momentanen Umgebungsbedingungen optimale Schreibspannung und Impulsbreite werden ermittelt.

Um Wiederholungsfehler nicht öfter als "Anzahl-max"-mal abzuspeichern, muß abgefragt werden, wie oft seit dem letzten Sperrcode der soeben ermittelte Fehler aufgetreten ist. Zu diesem Zweck wird zunächst die Anzahl auf Null gesetzt und nach dem letzten Sperrcode beginnend jeweils abgefragt, ob der Fehler dem aktuellen Fehler entspricht, um in diesem Falle die Anzahl um eines zu erhöhen, solange bis man jene Adresse j erreicht hat, bei der kein Fehler mehr abgespeichert ist. Nur wenn die so ermittelte Anzahl kleiner als die maxi-

3

male Anzahl ist, wird der aktuelle Fehler auf die Adresse j eines EPROMs (Speicher 3) geschrieben.

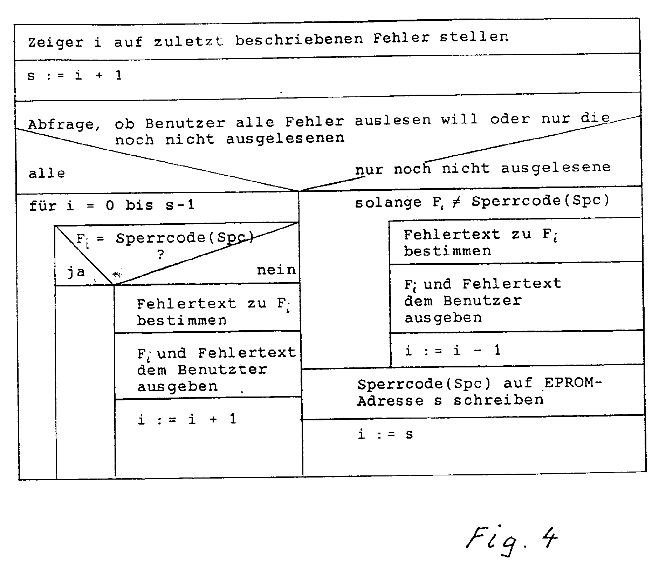

Wird bei einem Service oder im Herstellerwerk der Fehlerlesevorgang ausgelöst, wird gemäß Fig. 4 der Adreßzeiger i auf den zuletzt beschriebenen Fehler gestellt und die nächsthöhere Adresse (i+1) unter dem Namen s abgespeichert. Falls der Benutzer überhaupt dazu berechtigt ist, wird er befragt, ob er alle bisherigen Fehler auslesen will, oder nur diejenigen Fehler, die seit dem letzten Auslesevorgang hinzugekommen sind.

Für den Fall, daß alle Fehler ausgelesen werden sollen, wird von der Adresse i=0 beginnend, ein Fehler nach dem anderen mit dem zugehörigen Fehlertext versehen und, beispielsweise über einen Drucker und/oder einen Bildschirm ausgegeben. Die Sperrcodes werden als solche erkannt und übersprungen.

Falls nur die noch nicht ausgelesenen Fehler ausgelesen werden sollen, werden, vom aktuellsten Fehler beginnend, die Fehlernummern solange mit dem zugehörigen Fehlertext versehen und ausgegeben, bis der nächste Sperrcode erkannt wird. Anschließend wird auf die Adresse s ein neuer Sperrcode geschrieben und der Adreßzeiger wird auf diese Adresse gestellt.

## Patentansprüche

1. Verfahren zum Speichern von Fehlern in einer Regleranordnung für Kraftfahrzeuge mit Brennkraftmaschinen (1), mit Rechen- und Reglereinheiten (2), die einen oder mehrere Mikrorechner samt Speichern für Programme, Daten etc. aufweisen und die zur Ermittlung und Abgabe von Stellgliedansteuersignalen und anderen Ausgangssignalen in Abhängigkeit von Geber- und Sensorsignalen eingerichtet sind, wobei Fehlerbitfolgen bei Auftreten von Fehlerzuständen der Brennkraftmaschine und/oder der Rechner-Reglereinheiten (2) in einen elektrisch nicht löschbaren Fehlerspeicher, z.B. einen EPROM eingelesen werden, wobei diese Fehlerbitfolgen zu einem späteren Zeitpunkt aus dem Fehlerspeicher ausgelesen werden, dadurch gekennzeichnet, daß nach dem Auslesen der Fehler (Fi) ein relativer Sperrcode (SpC) in den Fehlerspeicher eingeschrieben wird, der das Auslesen älterer, vor dem Sperrcode liegender Fehler für ein vorgegebenes Leseprogramm blockiert.

2. Verfahren nach Anspruch 1, dadurch gekennzeichnet, daß mit einem anderen Leseprogramm mit einem besonderen Befehl unter Umgehung des relativen Sperrcodes (SpC) sämtliche abgespeicherten Fehlerbitfolgen aus dem Fehlerspeicher (3) auslesbar sind.

3. Verfahren nach Anspruch 1 oder 2, dadurch gekennzeichnet, daß der Fehlerspeicher (3) als LIFO (last in - first out) Speicher organisiert ist.

4. Verfahren nach einem der Ansprüche 1 bis 3, dadurch gekennzeichnet, daß insbesondere bei Verwendung eines EPROM-Fehlerspeichers eine Anpassung der Einschreibbedingungen, z.B. der Schreibspannung und der Impulsbreite, an die Umgebungstemperatur des Speichers (3) vorgesehen ist.

5. Verfahren nach einem der Ansprüche 1 bis 4, dadurch gekennzeichnet, daß der Fehlerspeicher in mechanischer und elektrischer Baueinheit mit einem Parameterspeicher (3) des Reglers ausgebildet ist, in dem für den Betrieb des Reglers (2) erforderliche motor- und fahrzeugspezifische Daten abgespeichert sind.

6. Verfahren nach einem der Ansprüche 1 bis 5, dadurch gekennzeichnet, daß identische Fehlerbitfolgen, die öfter als eine bestimmte Maximalanzahl hintereinander auftreten, nicht mehr in dem Fehlerspeicher (3) abgespeichert werden.

## Claims

1. Method of storing faults in a controller for motor vehicles with internal combustion engines (1), with computer and regulator units (2) which have one or several micro-computers together with stores for programs, data, etc., and which are set up to determine and transmit adjustment device control signals depending upon transmitter and sensor signals, in which when fault conditions occur in the engine and/or the computer control units (2) fault bit sequences are read into a fault store which cannot be erased electrically, e.g. an EPROM, so that these fault bit sequences can be read out from the fault store at a later time, characterised in that after the faults (Fi) have been read out a relative blocking code (SpC) is entered into the fault store and blocks the read-out of older faults lying before the blocking code for a pre-set reading program.

2. Method as claimed in claim 1, characterised in that using another reading program with a special command the relative blocking code (SpC) can be bypassed and all the stored fault bit sequences can be read out from the fault store (3).

3. Method as claimed in claims 1 or 2, characterised in that the fault store (3) is organised as a LIFO (first infirst out) store.

4. Method as claimed in claims 1 to 3, characterised in that particularly when an EPROM fault store is used provision is made for an adaptation of the entry conditions, e.g. the writing voltage and the pulse width, to the ambient temperature of the store (3).

5. Method as claimed in one of claims 1 to 4, characterised in that the fault store is constructed in a mechanical and electrical component with a parameter store (3) of the controller in which data specific to the engine and the vehicle are stored which are necessary for operation of the controller (2).

6. Method as claimed in one of claims 1 to 5, characterised in that identical fault bit sequences which occur more frequently than a specific maximum number are no longer stored in the fault store (3).


**Revendications**

1. Procédé pour la mémorisation d'incidents dans un dispositif de régulation électronique de véhicule à moteur à combustion comportant des unités de calcul et de traitement (2) comprenant un ou plusieurs microordinateurs comportant des mémoires de programme, données, etc. et qui sont prévues pour la détection et la réception de signaux de commande de composants de réglage ainsi que d'autres signaux de sortie en relation avec les signaux d'émission et de détection, par lesquels des suites de bits d'incident dûes à l'existence d'un état d'incident du moteur à combustion et/ou des unités de calcul et de traitement (2) sont mémorisées dans une mémoire d'incident électriquement non effaçable, c'est-à-dire une mémoire morte programmable, par lesquels ces suites de bits d'incident sont extraites de la mémoire d'incident, caractérisé en ce qu'après l'extraction de l'incident (Fi), un code de blocage symbolique (SpC) est entré dans la mémoire d'incident, dont le rôle est de bloquer ultérieurement la fonction d'extraction avant l'incident mémorisé dans le code de blocage pour un programme de lecture prédéterminé.

2. Procédé selon la revendication 1, caractérisé en ce qu'au moyen d'un autre programme de lecture comprenant une instruction particulière qui, par l'extraction du code de blocage symbolique (SpC), permet de sélectionner des suites complètes de bits d'incident mémorisées dans la mémoire d'incident (3).

3. Procédé selon la revendication 1 ou 2, caractérisé en ce que la mémoire d'incident (3) est configurée comme une mémoire LIFO (dernier entré - premier sorti).

4. Procédé selon l'une quelconque des revendications 1 à 3, caractérisé en ce que l'utilisation, en particulier, d'une mémoire d'incident du type mémoire morte programmable permet l'adaptation des conditions d'enregistrement, c'est-à-dire de l'opération d'écriture ainsi que de la largeur d'impulsion d'écriture selon la température ambiante de la mémoire (3).

5. Procédé selon l'une quelconque des revendications 1 à 4, caractérisé en ce que la mémoire d'incident qui se trouve dans une unité modulaire mécanique et électrique est composée d'une mémoire de paramètres (3), d'ordinateur dans laquelle sont mémorisées les données spécifiques du moteur et du véhicule nécessaires aux opérations d'ordinateur (2).

6. Procédé selon l'une quelconque des revendications 1 à 5, caractérisé en ce que les suites de bits identiques qui sont appliquées de manière successive à la mémoire d'incident (3) en un nombre maximal connu ne sont pas mémorisées.

5

Fig. 1

Fig. 2a

Fig. 2b

Fig. 2c

Fig. 2d

EP 0 357 588 B1

bei Initialisierung:
Zeiger i auf zuletzt geschriebenen Sperrcode stellen

.
.
.
.

Fehler erkannt
?

ja                                                    nein

Fehlernummer F ermitteln

Indikatorsignal abgeben
(z.B. Fehlerlampe)

Ermittlung der Schreibspannung
und Impulsbreite

$j := i$

Anzahl $:= 0$

solange $F_j \neq$ "leer"

$j := j + 1$

$F = F_j$
?

ja                              nein

Anzahl $:=$ Anzahl $+ 1$

Anzahl $>=$ Anzahl max
?

ja                                          nein

F als $F_j$ auf EPROM-
Adresse j abspeichern

.
.
.
.

F ... Fehlernummer
i ... Adreßzeiger für letzten Sperrcode
j ... laufender Adreßzeiger
Anzahl max ... maximale Anzahl von gleichen Fehlern,
                die noch abgespeichert wird

*Fig. 3*

7

Zeiger i auf zuletzt beschriebenen Fehler stellen

$s := i + 1$

Abfrage, ob Benutzer alle Fehler auslesen will oder nur die noch nicht ausgelesenen

alle                                    nur noch nicht ausgelesene

| für i = 0 bis s-1 | solange $F_i \neq$ Sperrcode(Spc) |

$F_i$ = Sperrcode(Spc) ?

ja                    nein

Fehlertext zu $F_i$ bestimmen

$F_i$ und Fehlertext dem Benutzter ausgeben

$i := i + 1$

Fehlertext zu $F_i$ bestimmen

$F_i$ und Fehlertext dem Benutzer ausgeben

$i := i - 1$

Sperrcode(Spc) auf EPROM-Adresse s schreiben

$i := s$

Fig. 4